# EUROPÄISCHE PATENTANMELDUNG

(11) **EP 1 388 470 A2**
(43) Veröffentlichungstag der Anmeldung: **11.02.2004**
(21) Anmeldenummer: 03006346.5
(22) Anmeldetag: 20.03.2003
(51) Int. Cl.: B60S 1/04, B62D 27/00

(54) **Verfahren zum Verbinden von Bauteilen, insbesondere von Scheibenwischeranlagen, mit Karosserieteilen eines Kraftfahrzeuges**

(30) Priorität: 07.08.2002 DE 10236111
(71) Anmelder: ROBERT BOSCH GMBH, 70442 Stuttgart (DE)
(72) Erfinder: Neubauer, Achim, 76547 Sinzheim-Vormberg (DE); Stihler, Patrick, 70190 Stuttgart (DE); von Garnier, Kai, 71336 Waiblingen (DE); Moench, Jochen, 76547 Sinzheim (DE)

(57) **Zusammenfassung**

Die Erfindung betrifft ein Verfahren zum Verbinden von Bauteilen, insbesondere von Scheibenwischeranlagen, mit Karosserieteilen eines Kraftfahrzeuges, wobei die Scheibenwischeranlage mit der Fahrzeugkarosserie an wenigstens einer Befestigungsstelle verklebt ist.

Es ist vorgesehen, dass die die wenigstens eine Befestigungsstelle bildenden Fügeflächen der Scheibenwischeranlage und/oder der Fahrzeugkarosserie einer atmosphärischen Plasmabehandlung unterzogen werden und die Verklebung mit einem feuchtigkeitsaushärtenden Klebstoffsystem erfolgt.

## Beschreibung

Die Erfindung betrifft ein Verfahren zum Verbinden von Bauteilen, insbesondere von Scheibenwischeranlagen, mit Karosserieteilen eines Kraftfahrzeuges, wobei die Scheibenwischeranlage mit der Fahrzeugkarosserie an wenigstens einer Befestigungsstelle verklebt ist.

### Stand der Technik

Bei der Fertigung von Kraftfahrzeugen ist bekannt, Scheibenwischeranlagen als vormontierte Baugruppe an die Automobilhersteller zum Einbau in die Kraftfahrzeuge zu liefern. Die vormontierte Baugruppe wird an wenigstens einer Befestigungsstelle mit der Fahrzeugkarosserie verbunden. Hierbei ist bekannt, die Scheibenwischeranlage mit der Fahrzeugkarosserie zu verschrauben oder gemäß der DE 100 62 617.3 zu verkleben.

Um eine ausreichende Festigkeit und Qualität der Verklebung zu erreichen, ist bekannt, die zu fügenden Flächen einer Beizbehandlung zu unterziehen oder spezielle Primer einzusetzen. Hierbei ist nachteilig, dass die Verwendung umweltbedenklicher Gefahrenstoffe erfolgt. Ferner ist bekannt, Bauteile mittels Zweikomponentenklebstoffen zu fügen. Um hier jedoch reproduzierbare Ergebnisse mit hoher Festigkeit und Qualität zu erreichen, ist die Mischungsqualität der Komponenten dieses Zweikomponentenklebstoffes entscheidend. Gerade bei einer Massenfertigung, beispielsweise im Kraftfahrzeugbau, ergeben sich hier große Schwierigkeiten, entsprechende Mengen an Zweikomponentenklebstoffen mit gleichbleibender Mischungsqualität zur Verfügung zu stellen.

### Vorteile der Erfindung

Das erfindungsgemäße Verfahren mit den in Anspruch 1 genannten Merkmalen bietet den Vorteil, dass eine Klebeverbindung zwischen Bauteilen geschaffen ist, die sich durch eine hohe Haftfestigkeit und einfache, für eine Massenproduktion geeignete Weise erzielen lässt. Dadurch, dass die die Befestigungsstelle zwischen den Bauteilen bildenden Fügeflächen der Scheibenwischeranlage und/oder der Fahrzeugkarosserie einer atmosphärischen Plasmabehandlung unterzogen werden und die Verklebung mit einem feuchtigkeitsaushärtenden Klebstoffsystem, insbesondere unter Zumischung feuchtigkeitstragender Beschleunigungssubstanzen, erfolgt, wird vorteilhaft erreicht, dass unter Verzicht von Gefahrenstoffen, wie Beizstoffe, Primer usw. eine deutlich verbesserte Adhäsion des Klebstoffes auf den Fügeflächen bei gleichzeitiger beschleunigter Aushärtung des Klebstoffsystems möglich ist. Hierdurch wird eine Verklebung der Bauteile, insbesondere eine Montage der Scheibenwischeranlage an Kraftfahrzeugkarosserieteilen, in wirtschaftlich vertretbaren Taktzeiten möglich, so dass diese Art der Verklebung für eine Massenproduktion geeignet ist. Insbesondere zeichnen sich die erhaltenen Klebstellen durch eine hohe Haftfestigkeit aus. Das erfindungsgemäße Verfahren kann insbesondere auch bei zu verklebenden Bauteilen aus Aluminium, Zinklegierungen, Magnesiumlegierungen und Stählen eingesetzt werden.

In bevorzugter Ausgestaltung der Erfindung ist vorgesehen, dass die zu verklebenden Bauteile, insbesondere wenigstens eine der Fügeflächen der Bauteile, während der Herstellung der Bauteile im Hinblick auf die spätere Verklebung zielgerichtet behandelt werden. Hier ist insbesondere vorgesehen, dass die späteren Fügeflächen nicht mit Kühl- und/oder Schmiermitteln, wie beispielsweise Bohremulsionen, in Kontakt kommen. Hierdurch wird verhindert, dass durch Eindringen der Kühl- und/oder Schmiermittel in oberflächenahe Schichten der später zu verklebenden Bauteile Haftblockierungsschichten gebildet werden, die die spätere Verklebung, insbesondere eine Haftfestigkeit der späteren Verklebung, beeinträchtigen.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnung, die ein Blockschaltbild des erfindungsgemäßen Verfahrens zeigt, näher erläutert.

### Beschreibung des Ausführungsbeispiels

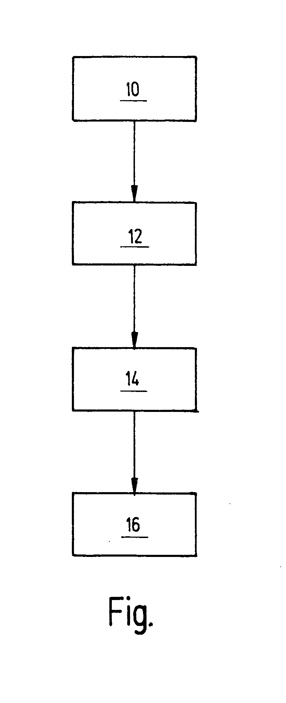

Das in der Figur dargestellte Blockschaltbild umfasst vier aufeinander folgende Verfahrensschritte 10, 12, 14 und 16. Im Verfahrensschritt 10 erfolgt die Herstellung eines ersten zu fügenden Bauteiles, wobei im Rahmen der Beschreibung hiervon ausgegangen wird, dass das Bauteil eine als Modul vorgefertigte Scheibenwischeranlage für Kraftfahrzeuge ist. Dies können sowohl Frontwischanlagen, Heckwischanlagen, Einmotorenwischanlagen, Zweimotorenwischanlagen, Gleichlaufwischeranlagen, Gegenlaufwischeranlagen oder dergleichen sein.

Im Schritt 12 erfolgt eine atmosphärische Plasmabehandlung der Fügeflächen der im Schritt 10 hergestellten Scheibenwischeranlagen.

Im Schritt 14 erfolgt eine Behandlung der Fügeflächen des zweiten zu fügenden Bauteiles, gemäß der vorliegenden Beschreibung der Kraftfahrzeugkarosserie beziehungsweise der Kraftfahrzeugteile, an denen die Scheibenwischeranlage befestigt werden soll. Dies kann beispielsweise ein so genannter Wasserkasten oder eine Heckscheibe oder dergleichen sein.

Im Schritt 16 schließlich erfolgt das Verkleben der zwei Bauteile, also der Scheibenwischeranlage mit der Kraftfahrzeugkarosserie.

Nachfolgend wird auf die einzelnen Verfahrensschritte näher eingegangen.

Im Schritt 10 werden zunächst die zu verklebenden Module hergestellt. Hierbei kann es sich um Einzelteile handeln, die zu einem Scheibenwischermodul komplettiert werden. Bekanntermaßen werden hierbei die Teile als Druckgussteile oder als spanend bearbeitete Teile hergestellt. Diese können beispielsweise aus Aluminium, Zink, Magnesium oder Stahl bestehen. Insbesondere bei druckgegossenen Teilen besitzen diese eine meist relativ poröse Struktur. Um ein tiefgründiges Eindringen von Kühl- und/oder Schmiermittel, beispielsweise Bohremulsion oder dergleichen, in die poröse Struktur zu verhindern, werden die später zu verklebenden Bauteile nicht in eine Kühl- beziehungsweise Reinigungsflüssigkeit eingetaucht, sondern lediglich Trennmittel im Oberflächenbereich der Bauteile eingesetzt. Diese Trennmittel können beispielsweise aus Polysiloxanen bestehen/gebildet werden. Diese haben die Eigenschaften, dass die Haftungseigenschaften der später verwendeten schnell aushärtenden Klebstoffe (Schritt 16) nicht wesentlich beeinflusst werden und zweitens bei der nachfolgenden Aktivierung der Fügeflächen (Schritt 12) diese Trennmittel in ihrer Wirkung neutralisiert werden können. Bei spanend bearbeiteten Bauteilen werden die Fügeflächen nicht mit einer Bohremulsion gekühlt beziehungsweise gespült, sondern beispielsweise mittels Druckluft oder dergleichen gekühlt und gesäubert.

Im Schritt 12 erfolgt die atmosphärische Plasmabehandlung der Fügefläche des wenigstens einen Bauteiles, hier der Scheibenwischeranlage. Hierbei wird mittels einer an sich bekannten Plasmaanlage das atmosphärische Plasma auf die Fügefläche beschleunigt. Ein derartiges atmosphärisches Plasma wird durch hochbeschleunigte Elektronen erzeugt, die Elemente des umströmenden Gases ionisieren und Radikale, beispielsweise O⁺, erzeugen. Diese Radikale, die aufgrund der freien Valenzelektronen extrem reaktionsfreudig sind, werden durch den Gasstrom auf die spätere Fügefläche beschleunigt und reagieren dort insbesondere mit organischen oder anorganischen Stoffen und gegebenenfalls auch mit metallischen Komponenten. Somit kann die Fügefläche von Verunreinigungen, beispielsweise von Trennmittelresten oder dergleichen, gereinigt werden und es werden adhäsionssteigernde Gruppen, beispielsweise Sauerstoffgruppen, in organische Stoffe, zum Beispiel Polymerketten, oder anorganische Kettenmoleküle eingebaut beziehungsweise die Radikale werden reaktiv gemacht. Im Ergebnis ergibt sich eine hochgradig gereinigte, je nach erfolgter Plasmabehandlung mikrostrukturierte und chemisch aktivierte Oberfläche, die eine ideale Anhaftung von Klebstoffen, insbesondere von schnell aushärtenden Klebstoffen, ermöglicht.

Ein Vorteil hierbei ist, dass der Plasmastrahl bei der atmosphärischen Plasmabehandlung relativ kühl ist und bei ausreichend großem Abstand zur behandelnden Oberfläche (Fügefläche) vom Düsenausgang absolut potentialfrei ist. Da sich bei der atmosphärischen Plasmatechnik ein flammenähnlicher Potentialkegel bildet, können auch tiefliegende und/oder nicht ebene Flächen beziehungsweise Vertiefungen oder dergleichen problemlos behandelt und für eine spätere Verklebung vorbereitet werden. Ferner sind zur optimalen Behandlung relativ kurze Aufenthaltszeiten im Plasmastrahl beziehungsweise sehr hohe Substratgeschwindigkeiten, beispielsweise bis 600 m/min möglich, so dass dieses Verfahren für eine Massenfertigung geeignet ist. Ein weiterer entscheidender Vorteil besteht darin, dass der durch die Plasmabehandlung aktivierte Zustand der späteren Fügefläche für einen bestimmten Zeitraum, der beispielsweise zwischen 2 und 4 Wochen betragen kann, erhalten bleibt, so dass nach erfolgter Plasmabehandlung dieser Zeitraum bis zu einer späteren Verklebung vergehen kann. Somit ist möglich, die hier im Beispiel angesprochene Scheibenwischeranlage durch die Plasmabehandlung entsprechend zu bearbeiten und die Komplettierung am Kraftfahrzeug dann nach entsprechender Anlieferung beim Automobilhersteller durchzuführen.

Während der atmosphärischen Plasmabehandlung wird der Plasmastrahl vorzugsweise so modifiziert, dass ein großer Bereich des Plasmakegels potentialbehaftet ist. Hierdurch kann die Haftung, beispielsweise bei einem schnell aushärtenden Polyurethanklebstoff, noch weiter verbessert werden, da dann die Oxidschichten an der Oberfläche, beispielsweise Aluminiumoxid (Al₂O₃)-Schichten bei Aluminiumlegierungen signifikant beeinflusst (aufgebrochen) und damit ebenfalls aktiviert werden können. Neben der optimalen Reinigung der späteren Fügefläche werden so gegebenenfalls zusätzliche Oxidgruppen in die Oberfläche eingebaut. Während der Plasmabehandlung ist zu beachten, dass keine metallischen Gegenstände in den potentialbehafteten Bereich des Plasmakegels gelangen und dass der Abstand zwischen behandelter Oberfläche (Fügefläche) und Düsenausgang in einem vorgebbaren Bereich liegt. Durch den Abstand und die Verfahrgeschwindigkeit des Plasmastrahls oder des Substrats wird die Intensität der Plasmaaktivierung der Oberfläche beeinflusst. Ist dieser Abstand und somit die Intensität der Plasmaanordnung zu klein beziehungsweise zu groß, beeinflusst dies die für die Anhaftung entscheidende Adhäsion der Oberfläche negativ. Hierdurch kann es zu so genannten Nichtgleichgewichtszuständen kommen, in denen sich O₂-aktive Gruppen in der Oberfläche räumlich so arrangieren, dass sie ins Werkstoffinnere wirken und daher für die Adhäsion an der Oberfläche wirkungslos sind. Hierbei ist zu beachten, dass bei bekannten atmosphärischen Plasmabehandlungsanlagen Abstände zwischen Düse und Substrat kleiner 5 mm eher oxidierend auf metallische Oberflächen wirken und Abstände größer 10 - 15 mm eher reduzierend wirken. Hier kann entsprechend dem später in Schritt 16 verwendeten Klebstoffsystem und dem Material der wenigstens einen Baugruppe der Abstand zwischen Düse der Plasmabehandlungsanlage und späterer Fügefläche entsprechend variiert werden.

In weiterer Ausgestaltung des erfindungsgemäßen Verfahrens kann vorgesehen sein, dass ein gezieltes Zusetzen von Substanzen in den Gasstrom der atmosphärischen Plasmaanlage ein Plasma mit chemisch geeigneter Zusammensetzung erzeugt wird. Hierdurch kann eine gezielte Modifikation der Oberfläche (Fügefläche) und deren chemischer Aufbau erreicht werden, indem beispielsweise durch Zusetzen von Silizium, organischen Substanzen, Silikonen oder dergleichen anhaftungserhöhenden Gruppen, beispielsweise Silikatgruppen, durch die Energie des Plasmas in die Oberfläche (Fügefläche) eingebunden werden.

Vorstehend wurde anhand der Schritte 10 und 12 erläutert, wie die eine Fügefläche des einen Bauteiles, hier der Scheibenwischeranlage, vorbereitet wurde. Die zugeordnete, wenigstens eine weitere Fügefläche am Karosserieteil, bei dem es sich beispielsweise um rohe und/oder lackierte Karosserieteile handelt, wird im Schritt 14 vorbereitet. Hierbei wird eine Reinigung der Fügefläche von anhaftenden Partikeln oder dergleichen durchgeführt.

Im Schritt 16 erfolgt schließlich das Fügen der beiden Bauteile an der wenigstens einen Fügeflächenpaarung mittels eines feuchtigkeitsaushärtenden Klebstoffsystems, bei dem vor dem Verkleben dem Klebstoff feuchtigkeitstragende Beschleunigersubstanzen zugemischt wurden. Hierdurch ist neben einer guten Haftung an den Fügeflächen eine rasche Aushärtung des Klebstoffs von innen heraus gewährleistet, so dass in kurzen Taktzeiten eine Massenfertigung möglich ist. Einem auch allgemein unter Booster-System bekannten Klebstoffsystem wird eine Substanz zugemischt, die ein sehr hohes Wasseraufnahmevermögen besitzt und mit Wasser nahezu maximal gesättigt ist. Wird nun diese Beschleunigersubstanz in einer Klebstoffapplikationsanlage möglichst homogen mit dem elastischen Klebstoff vermischt und durch eine Düse in Raupenform auf die zu verklebenden Fügeflächen appliziert, ergibt sich ein Schichtaufbau, der sich durch abwechselnde Bereiche von Klebstoff und Beschleunigerbereiche auszeichnet. Hierdurch wird erreicht, dass das Klebstoffsystem während der Topfzeit hochzäh ist und sich die zu fügenden Teile gut positionieren lassen. Anschließend wird dann eine rasche Vernetzung beziehungsweise Aushärtung des Klebstoffs von innen heraus ermöglicht. Derartige Klebstoffsysteme sind geeignet, eine exakte Positioniergenauigkeit zu erreichen. Nach einmaligem Positionieren und Fügen bleibt die eingenommene Position zwischen den Fügepartnern erhalten und anschließend härtet das Klebstoffsystem innerhalb von zirka 2 Stunden vollkommen aus, wobei bereits nach zirka 30 min eine hohe Klebefestigkeit erreicht ist, die eine Handhabung der Klebepartner ermöglicht. So kann beispielsweise gemäß dem gewählten Beispiel eine gefügte (geklebte) Scheibenwischeranlage mit weiteren Bauteilen, beispielsweise Wischerarm oder dergleichen, komplettiert werden, ohne dass die Fügestelle beeinträchtigt wird.

Durch Verwendung eines derartigen schnell aushärtenden Klebstoffsystems auf einer plasmabehandelten Fügefläche kann eine optimale Benetzung der Grenzfläche zum Klebstoff realisiert werden und somit eine hohe Adhäsionsfestigkeit erhalten werden. Der der Fügefläche oberflächennahe Klebstoff innerhalb des Klebstoffsystems kann bei homogener Verteilung der Beschleunigersubstanzen innerhalb des Klebstoffsystems schnell, homogen und somit vorspannungsfrei aushärten beziehungsweise vernetzen. Hierdurch ist sichergestellt, dass durch Kombination der Plasmabehandlung der wenigstens einen Fügefläche und Einsatz des feuchtigkeitsaushärtenden Klebstoffsystems unter Verwendung feuchtigkeitstragender Beschleunigungssubstanzen eine hochfeste, elastische Klebeverbindung von Aluminiumbauteilen, Zinkbauteilen, Magnesiumbauteilen beziehungsweise Stahlbauteilen erzielt werden kann. Insbesondere beim Kraftfahrzeugbau kann so ohne Einsatz zusätzlicher Befestigungselemente, wie Schrauben oder dergleichen, die Anbindung von modulartig angelieferten Bauteilen, beispielsweise Scheibenwischeranlagen, an Karosserieteile mit hoher Effektivität erfolgen.

Hinsichtlich der Möglichkeit der Ausbildung der einzelnen Fügestellen zwischen Scheibenwischeranlage und Karosserieteil wird beispielhaft auf die DE 100 62 617.3 verwiesen. Der dortige Offenbarungsgehalt wird hiermit ausdrücklich zum Offenbarungsgehalt dieser Anmeldung gemacht.

## Patentansprüche

1. Verfahren zum Verbinden von Bauteilen, insbesondere von Scheibenwischeranlagen, mit Karosserieteilen eines Kraftfahrzeuges, wobei die Scheibenwischeranlage mit der Fahrzeugkarosserie an wenigstens einer Befestigungsstelle verklebt ist, **dadurch gekennzeichnet, dass** die die wenigstens eine Befestigungsstelle bildenden Fügeflächen der Scheibenwischeranlage und/oder der Fahrzeugkarosserie einer atmosphärischen Plasmabehandlung unterzogen werden und die Verklebung mit einem feuchtigkeitsaushärtenden Klebstoffsystem erfolgt.

2. Verfahren nach Anspruch 1, **dadurch gekennzeichnet, dass** zumindest eine der Fügeflächen während der Herstellung des Bauteiles beziehungsweise der Bauteile nicht mit einem Kühl- und/oder Schmiermittel in Kontakt gebracht wird.

3. Verfahren nach Anspruch 2, **dadurch gekennzeichnet, dass** zumindest eine der Fügeflächen mit einem Trennmittel, insbesondere Polysiloxane, gekühlt beziehungsweise geschmiert wird.

4. Verfahren nach einem der vorhergehenden Ansprüche, **dadurch gekennzeichnet, dass** mittels der atmosphärischen Plasmabehandlung freie Radikale, insbesondere O⁺, auf die Fügeflächen beschleunigt werden.

5. Verfahren nach einem der vorhergehenden Ansprüche, **dadurch gekennzeichnet, dass** der Plasmastrahl so modifiziert wird, dass ein großer Bereich des Plasmakegels potentialbehaftet ist.

6. Verfahren nach einem der vorhergehenden Ansprüche, **dadurch gekennzeichnet, dass** während der Plasmabehandlung ein Abstand zwischen einer Düse der Plasmabehandlungsanlage und der Fügefläche variiert wird.

7. Verfahren nach einem der vorhergehenden Ansprüche, **dadurch gekennzeichnet, dass** dem Plasma gezielt Substanzen zur Modifikation der Fügefläche zugesetzt werden.

8. Verfahren nach Anspruch 7, **dadurch gekennzeichnet, dass** dem Plasma Silanverbindungen, organische Substanzen oder andere haftvermittelnde oder haftungserhöhende Verbindungen zugesetzt werden.

9. Verfahren nach einem der vorhergehenden Ansprüche, **dadurch gekennzeichnet, dass** dem Klebstoffsystem feuchtigkeitstragende Beschleunigungssubstanzen zugemischt werden.

10. Verfahren nach einem der vorhergehenden Ansprüche, **dadurch gekennzeichnet, dass** wenigstens ein Bauteil aus Aluminium, Zink, Magnesium, Stahl oder Gussteilen aus diesen Materialien verklebt wird.
